# EUROPEAN PATENT APPLICATION

(11) **EP 1 375 728 A1**
(43) Date of publication of application: **02.01.2004**
(21) Application number: 02713207.5
(22) Date of filing: 27.03.2002
(51) Int. Cl.: D06F 39/08

(54) **ELECTRIC WASHING MACHINE**

(30) Priority: 05.04.2001 JP 2001106923; 27.04.2001 JP 2001133252
(71) Applicant: Sanyo Electric Co., Ltd., Moriguchi-shi, Osaka 570-8677 (JP)
(72) Inventor: MAMIYA, Haruo c/o SANYO ELECTRIC CO., LTD., Moriguchi-shi, Osaka 570-8677 (JP); ONISHI, Katsuji c/o SANYO ELECTRIC CO., LTD., Moriguchi-shi, Osaka 570-8677 (JP); EIFUKU, Yuji c/o SANYO ELECTRIC CO., LTD., Moriguchi-shi, Osaka 570-8677 (JP); KURODA, Koichi c/o SANYO ELECTRIC CO., LTD., Moriguchi-shi, Osaka 570-8677 (JP); MAE, Shinji c/o SANYO ELECTRIC CO., LTD., Moriguchi-shi, Osaka 570-8677 (JP)
(74) Representative: Steil, Christian, Dipl.-Ing.
(86) International application number: PCT/JP2002/002975
(87) International publication number: WO 2002/081808

(57) **Abstract**

An electric washing machine according to the present invention performs a washing process with the use of electrolyzed water. When the level of supplied water reaches an electrolyzing water level which is lower than a washing water level, energization of an electrolyzing device (31) is started. At this time, air is supplied into an electrolyzing chamber (32) by an air pump (89), so that water in the electrolyzing chamber (32) is caused to flow, thereby assisting efficient electrolysis of the water. The water thus electrolyzed has an enhanced cleaning capability thereby to improve the washing performance of the washing machine.

## Description

### TECHNICAL FIELD

The present invention relates to an electric washing machine.

### PRIOR Art

Electric washing machines usually perform a washing process with the use of a detergent.

### SUMMARY OF THE INVENTION

It is an object of the present invention to provide an electric washing machine which is capable of washing laundry without the use of a detergent. Further, the present invention is directed to an electric washing machine which uses a drastically reduced amount of a detergent.

In accordance with a first aspect of the present invention, there is provided an electric washing machine comprising a washing tub for containing laundry, water level detecting means for detecting a level of water supplied into the washing tub, and an electrolyzing device for electrolyzing the water in use for a washing process to impart a cleaning capability to the water without addition of a detergent, the electric washing machine characterized by energization controlling means which energizes the electrolyzing device for the electrolysis when the water level detecting means senses that the level of the water contained in the washing tub reaches a predetermined water level which is lower than a water level required for a washing or rinsing operation after water supply into the washing tub is started for the washing or rinsing operation.

With this arrangement, the electrolysis is started by the energization and the timing of the start of the electrolysis is advanced, so that the electrolysis can be carried out for a longer period of time. As a result, water electrolyzed to a high degree or so-called "densely electrolyzed" water can be produced, thereby enhancing the cleaning capability.

In accordance with a second aspect of the present invention, there is provided an electric washing machine comprising a washing tub for containing laundry, an electrolyzing device for electrolyzing water in use for a washing process to impart a cleaning capability to the water without addition of a detergent, and energization controlling means for controlling energization of the electrolyzing device for the electrolysis, the electrolyzing device including an electrolyzing chamber, at least one pair of electrodes disposed in the electrolyzing chamber, and a water communication path which permits communication between the electrolyzing chamber and the washing tub for water passage, the electric washing machine characterized by air supplying means for supplying air into the electrolyzing chamber froma lower portion of the electrolyzingchamber, wherein the air supplying means supplies the air during the energization by the energization controlling means.

With this arrangement, the air promotes the flow of the water in the electrolyzing chamber, so that the water can efficiently be electrolyzed. Therefore, densely electrolyzed water can advantageously be obtained.

In accordance with a third aspect of the present invention, there is provided an electric washing machine comprising a washing tub for containing laundry, an electrolyzing device for electrolyzing water in use for a washing process to impart a cleaning capability to the water without addition of a detergent, and energization controlling means for controlling energization of the electrolyzing device for the electrolysis, the energization controlling means including means for detecting an energization electric current, wherein the energization controlling means changes conditions for the energization of the electrolyzing device according to the detected energization electric current.

This arrangement suppresses overcurrent during the electrolysis and permits adjustment of the energization electric current for the electrolysis when the washing process is performed with the use of a reduced amount of the detergent. Therefore, densely electrolyzed water can advantageously be obtained. The energization conditions are herein changed, for example, by changing the magnitude of the energization electric current, by switching between continuous energization and intermittent energization, by changing the ratio between an energization period and a non-energi zed period during the intermittent energization, or by interrupting the energization.

In accordance with a fourth aspect of the present invention, there is provided an electric washing machine comprising a washing tub provided in a housing for containing laundry, an electrolyzing device for electrolyzing water in use for a washing process to impart a cleaning capability to the water without addition of a detergent, and energization controlling means for controlling energization of the electrolyzing device for the electrolysis, the housing having an openable lid covering a loading port through which the laundry is loaded into and unloaded from the washing tub, the energization controlling means including means for detecting the opening and closing of the lid, wherein the energization controlling means stops the energization upon detection of the opening of the lid.

This arrangement gives a feeling of safety to a user.

In accordance with a fifth aspect of the present invention, there is provided an electric washing machine comprising a washing tub for containing laundry and washing the laundry therein, and an electrolyzing device for electrolyzing water in use for a washing process to impart a cleaning capability to the water without addition of a detergent, the electric washing machine characterized by washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, and intermediate dehydration period reducing means for reducing a period of an intermediate dehydrating operation to be performed after the washing operation or a rinsing operation when the second course is effected by the washing controlling means as compared with that when the first course is effected.

With this arrangement, a process time in the second course in which a smaller amount of the detergent is used can be reduced. In the second course, a resistance caused due to bubbles of the detergent can be reduced, so that a dehydration effect can be enhanced in a shorter period of time.

In accordance with a sixth aspect of the present invention, there is provided an electric washing machine comprising a washing tub for containing laundry and washing the laundry therein, and an electrolyzing device for electrolyzing water in use for a washing process to impart a cleaning capability to the water without addition of a detergent, the electric washing machine characterized by washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, and water drainage period reducing means for reducing a period of water drainage from the washing tub when the second course is effected by the washing controlling means as compared with that when the first course is effected.

The second course in which a smaller amount of the detergent is used suppresses the generation of the bubbles as compared with the first course in which a greater amount of the detergent is used, so that the water can be drained in a shorter period of time. Therefore, a process time in the second course can be reduced by the water drainage period reducing means.

In accordance with a seventh aspect of the present invention, there is provided an electric washing machine comprising a washing tub for containing laundry, and an electrolyzing device for electrolyzing water in use for a washing process to impart a cleaning capability to the water without addition of a detergent, the electric washing machine characterized by energization controlling means which, where the detergent is added to water contained in the washing tub for the washing process, stops energization of the electrolyzing device during a washing operation but effects energization of the electrolyzing device during a rinsing operation.

With this arrangement, the electrolysis is not carried out during the washing operation employing the water containing the detergent, but carried out only during the rinsing operation. Therefore, the overcurrent can assuredly be prevented during the washing operation, and a sterilizing effect can be provided during the rinsing operation.

In accordance with an eighth aspect of the present invention, there is provided an electric washing machine comprising a washing tub for containing laundry and washing the laundry therein, and an electrolyzing device for electrolyzing water in use for a washing process to impart a cleaning capability to the water without addition of a detergent, the electric washing machine characterized by washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, wherein the energization controlling means reduces a period of energization of the electrolyzing device or an energization electric current when the first course is effected as compared with that when the second course is effected.

With this arrangement, the electrolysis is also carried out when the detergent is added, but the energization period or the energization electric current is reduced for suppression of overcurrent. Thus, the water can be electrolyzed without any problem, and provide a sterilizing effect of the electrolyzed water.

In accordance with a ninth aspect of the present invention, there is provided an electric washing machine comprising a washing tub for containing laundry, and an electrolyzing device for electrolyzing water in use for a washing process to impart a cleaning capability to the water without addition of a detergent, the electric washing machine characterized by energization controlling means which, where a dry-cleaning course is predefined for performing the washing process with the use of a dry-cleaning detergent, performs one of three control operations in the dry-cleaning course, the three control operations including a control operation in which energization of the electrolyzing device is stopped and control operations in which an energization period or an energization electric current is reduced as compared with that in a course accompanying the energization of the electrolyzing device.

With this arrangement, shrinkage of clothes due to the electrolyzed water can be suppressed in the dry-cleaning course.

In accordance with a tenth aspect of the present invention, there is provided an electric washing machine comprising a washing tub for containing water and laundry and washing the laundry therein by agitating the water and the laundry, the electric washing machine characterized by water treatment means for electrolyzing the water to impart a cleaning capability to the water, and air bubble generating means for generating minute air bubbles by injecting air into the water.

With this arrangement, the cleaning capability can be improved by the electrolyzed water and ultrasonic waves caused when the minute air bubbles are broken.

### BRIEF DESCRIPTION OF THE DRAWINGS

Fig. 1 is a side sectional view of a fully automatic washing machine according to one embodiment of the present invention;
Fig. 2 is a partly sectional front view of the fully automatic washing machine shown in Fig. 1;
Fig. 3 is a partly sectional side view of a water treatment unit;
Fig. 4 is a schematic diagram schematically illustrating the construction of the water treatment unit as viewed from the front side thereof;
Fig. 5 is a plan view of an operation panel for illustrating the constructions of an operation section and a display section;
Fig. 6 is a diagram illustrating the electrical construction of the fully automatic washing machine according to the embodiment;
Fig. 7 is a flow chart for explaining a washing process in a standard course to be performed by the fully automatic washing machine according to the embodiment;
Fig. 8 is a flow chart for explaining a washing process in a zero detergent course to be performed by the fully automatic washing machine according to the embodiment;
Fig. 9 is a timing chart for explaining the washing process in the zero detergent course to be performed by the fully automatic washing machine according to the embodiment;
Fig. 10 is a flow chart for explaining a control operation for controlling the energization of the water treatment unit in the zero detergent course in the fully automatic washing machine according to the embodiment;
Fig. 11 is a circuit diagram schematically illustrating an energization circuit and an electric current detection circuit according to the embodiment;
Fig. 12 is a flow chart for explaining a washing process in a zero detergent course different from the course shown in Fig. 8 in the fully automatic washing machine according to the embodiment; and
Fig. 13 is a timing chart for explaining a preliminary washing operation and a main washing operation to be performed by the fully automatic washing machine according to the embodiment.

### EMBODIMENTS OF THE INVENTION

A fully automatic washing machine according to one embodiment of the present invention will hereinafter be described with reference to the attached drawings.

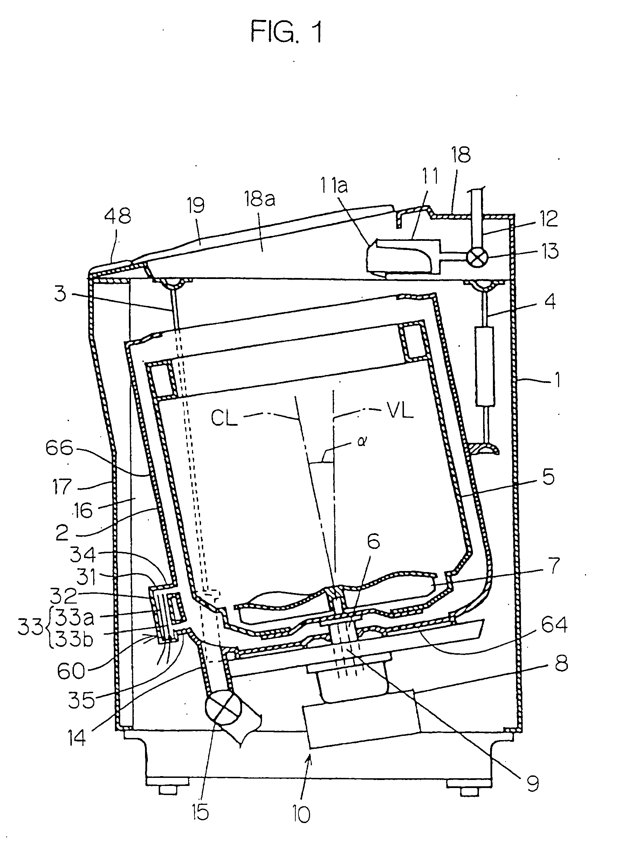

Fig. 1 is a side sectional view illustrating the construction of the fully automatic washing machine according to this embodiment. A bottomed cylindrical outer tub 2 is suspended in a forwardly inclined manner within a housing 1 of the washing machine by front suspension rods 3 and rear suspension rods 4 (though one front suspension rod and one rear suspension rod are shown in the figure, there are two front suspension rods and two rear suspension rods). A front upper portion of the housing 1 projects forward correspondingly to the forward projection of an upper portion of the inclined outer tub 2. The housing 1 has a widely open front portion 16, which is covered with a detachable front panel 17. Therefore, an upper portion of the front panel 17 projects correspondingly to the projection of the upper portion of the outer tub 2.

A washing/dehydration tub (inner tub) 5 having a multiplicity of dehydration perforations formed in a circumferential wall thereof is supported within the outer tub 2 rotatably about a dehydration shaft 6 thereof. The outer tub 2 and the inner tub 5 constitute a washing tub according to the present invention. A pulsator 7 (water stream generating means) for generating water streams within the outer tub 2 for agitation of laundry is disposed on an inner bottom portion of the inner tub 5. A driving mechanism 10 for driving the pulsator 7 and the inner tub 5 is provided at the bottom of the outer tub 2 . The driving mechanism 10 includes the dehydration shaft 6, a pulsator shaft 9 provided in the dehydration shaft 6 for rotating the pulsator 7, a motor 8 provided coaxially with the dehydration shaft 6 and the pulsator shaft 9, and a clutch for switchably transmitting power of the motor 8 only to the pulsator shaft 9 or to both the pulsator shaft 9 and the dehydration shaft 6. The driving mechanism 10 principally rotates only the pulsator 7 in one direction or in opposite directions in a washing operation and a rinsing operation, and unitarily rotates the inner tub 5 and the pulsator 7 in one direction (or in a normal direction) in a dehydrating operation. The inner tub 5 is rotated once by each turn of the motor 8. On the other hand, a reduction gear mechanism (not shown) is provided in a middle portion of the pulsator shaft 9, so that the pulsator 7 is rotated according to a reduction radio of the reduction gear mechanism.

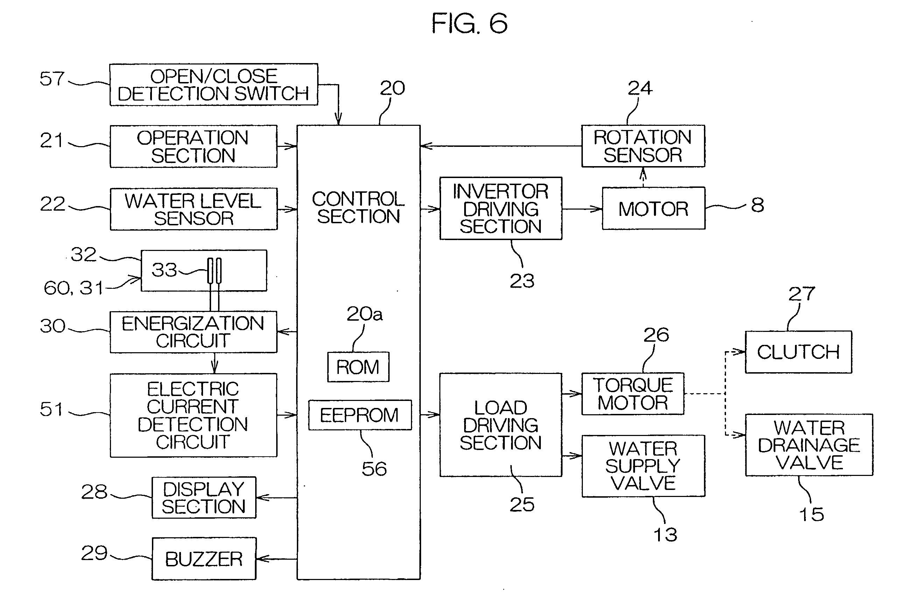

Awater supplyport 11 having a detergent container 11a for supplying a detergent contained therein is provided on an upper rear side of the outer tub 2. A water supply tube 12 having a water supply valve 13 provided in a middle portion thereof is connected to the water supply port 11. When the water supply valve 13 is opened, tap water is supplied to the water supply port 11 from an external tap through the water supply tube 12. Thus, the tap water flows downward into the outer tub 2 from the water supply port 11. One end of a water drainage tube 14 is connected to a front bottom portion or lowermost portion of the outer tub 2. The water drainage tube 14 is opened and closed by a water drainage valve 15. The other end of the water drainage tube 14 is connected to an external sewage drain through a self-standing hose not shown. The opening and closing of the water drainage valve 15 are associated with the switching of the aforesaid clutch. When a torque motor 26 (see Fig. 6) is not operated, the pulsator 7 is decoupled from the inner tub 5 so as to be solely rotated with the water drainage valve 15 being closed. When the torque motor is operated to pull a wire to the midst, the pulsator 7 is coupled to the inner tub 5 with the water drainage valve 15 being closed. When the wire is further pulled, the water drainage valve 15 is opened with the pulsator 7 kept coupled to the inner tub 5.

In the washing machine according to this embodiment, the outer tub 2 and the inner tub 5 are inclined forward as described above, so that open tops of the outer tub 2 and the inner tub 5 are directed forward with respect to a vertically upward direction. That is, a center line CL of the outer tub 2 is tilted at a predetermined tilt angle α with respect to a vertical line VL. Thus, a user standing in front of the washing machine can easily view the bottom of the inner tub 5 and easily take out the laundry. A tilt angle α of about 5 degrees to about 20 degrees ensures easy take-out of the laundry, and yet suppresses the projection of the housing 1. In this embodiment, the tilt angle α is set at about 10 degrees.

An electrolyzing device 31 as water treatment means is disposed on a lower portion of a circumferential wall of the outer tub 2. The electrolyzing device 31 is provided as a unit separate from the outer tub 2, and fixed to the outer tub 2 by screws, for example. The electrolyzing device 31 is located on a front side of the outer tub 2, and appears when the front panel 17 is removed. This arrangement facilitates the repair and replacement of the electrolyzing device 31.

The electrolyzing device 31 includes an electrolyzing chamber 32 provided separately from the outer tub 2, a pair of electrodes 33 disposed in the electrolyzing chamber 32, an upper water communication path 34 connecting an upper portion 69 of the electrolyzing chamber 32 to the outer tub 2, and a lower water communication path 35 connecting a lower portion of the electrolyzing chamber 32 to the outer tub 2.

The electrolyzing device 31 is located at such a vertical position that at least parts of the pair of electrodes 33 are submerged in water when the level of the water contained in the outer tub 2 reaches a washing water level.

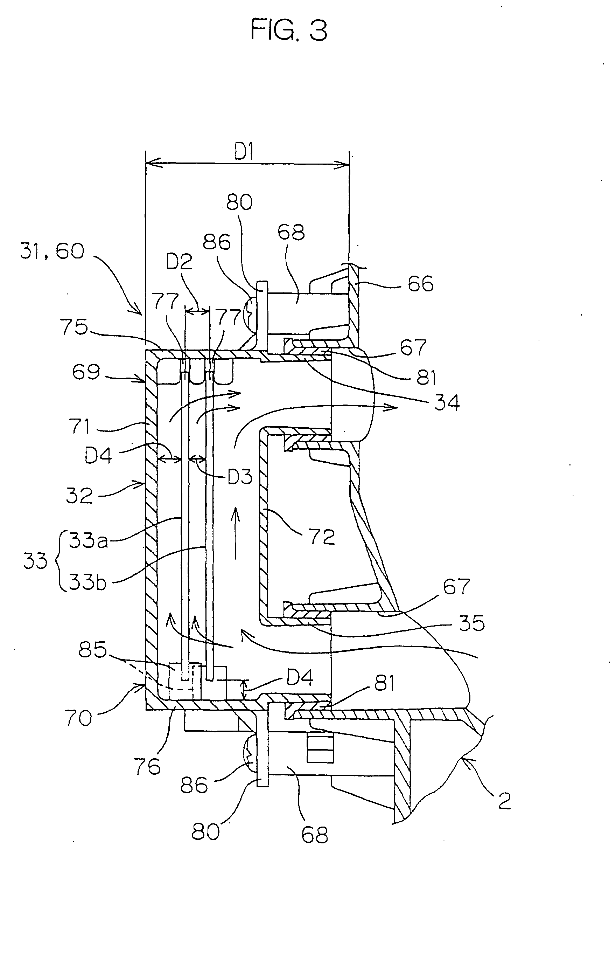

The pair of electrodes 33 include a first electrode 33a and a second electrode 33b. The first electrode 33a and the second electrode 33b each have a thin square plate shape. The electrolyzing chamber 32 is configured in a thin box shape having a smaller depth (indicated by D1 in Fig. 3) with respect to the circumferential wall of the outer tub 2. The first electrode 33a and the second electrode 33b are disposed in predetermined spaced relation in the electrolyzing chamber 32 with surfaces thereof facing toward the circumferential wall of the outer tub. This arrangement suppresses the projection of the electrolyzing device 31 provided on the circumferential surface of the outer tub 2. Thus, the electrolyzing device 31 is prevented frombumping against the housing 1 when the outer tub 2 vibrates during the dehydrating operation.

It is also conceivable that the electrolyzing chamber 32 of the electrolyzing device 31 is provided integrally with the outer tub 2 and the electrodes 33 are provided inside the outer tub 2. In this case, however, it is difficult to mount the electrodes 33 in a narrow space inside the outer tub 2 and to take out the electrodes 33 for maintenance and recycling. This is why the electrolyzing device 31 is provided as a unit, i.e., as a water treatment unit 60, which can be mounted outside the outer tub 2.

The water treatment unit 60 is constructed so as to be handled unitarily in the assembling. For example, the water treatment unit has the electrolyzing chamber 32, the pair of electrodes 33 disposed in the electrolyzing chamber 32, and the pair of water communication paths 34, 35 extending from the electrolyzing chamber 32, so as to solely constitute the aforesaid electrolyzing device 31. The electrolyzing chamber 32 and the pair of water communication paths 34, 35 are integrally formed of a synthetic resin.

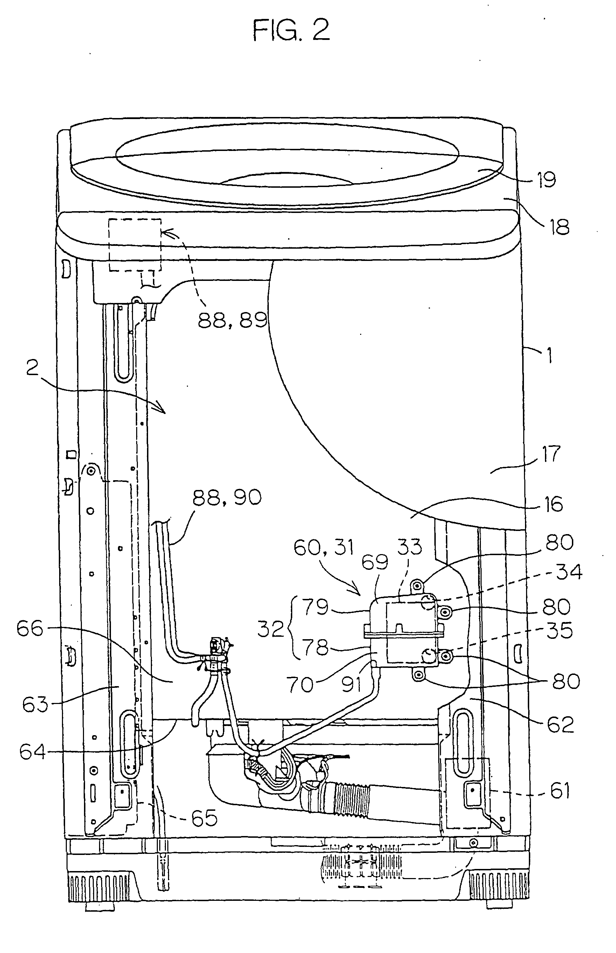

The water treatment unit 60 is mounted on a front lower right portion of the outer tub 2 as seen from the front side thereof in Fig. 2 in an open space defined between a corner of the housing 1 and the outer tub 2. An energization circuit 30 (see Fig. 6) is electrically connected to the water treatment unit 60. The energization circuit 30 has a transformer 61 and the like. The transformer 61 which typically has a greater weight is stably fixed to a highly strong front portion 62 of a right corner of the housing 1 as seen from the front side thereof. The transformer 61 may be fixed to the bottom 64 of the outer tub 2. In this case, the vibrations of the outer tub 2 can advantageously be suppressed by utilizing the great weight of the transformer 61.

The water treatment unit 60 and the transformer 61 are located in the vicinity of the open portion 16 of the housing 1 and, therefore, easily accessed through the open portion 16 for an assembling operation, a maintenance operation for repair, replacement or the like, and a disassembling operation for recycling. Further, the water treatment unit 60 and the transformer 61 are closely located, so that electrical connection therebetween is easily established. Since the water treatment unit 60 and the transformer 61 are detachably fixed by screws, the aforesaid operations can advantageously be performed.

The water treatment unit 60 and the transformer 61 are fixed at a position remote from electrical components for controlling motor rotation such as a rotation sensor 24 (see Fig. 6) provided in the motor 8 and a control circuit board 65 fixed to a front left portion 63 of the housing 1 and including an invertor driving section 23 (see Fig. 6), and interconnection components (not shown) connecting these components. Thus, noises caused by the transformer 61 during electrolysis can be prevented from exerting an adverse effect on the control of the rotation of the motor 8.

As shown in Fig. 3, the electrodes 33 are disposed parallel to the largest face, e.g., a front face portion 71, of the thin-box-shaped electrolyzing chamber 32, and each have a plate shape having a size corresponding to the size of the front face portion 71. Since the electrodes 33 thus have greater areas, a requirement for the surface areas is satisfied by a minimum number of electrodes 33. The electrodes 33 are formed of a metal, and disposed in opposed relation. The plate-shaped electrodes 33 are supported at a predetermined inter-electrode pitch with opposite sides of plate faces thereof or opposite edges thereof being held. Opposite polarities are respectively applied to the pair of electrodes 33 for the electrolysis of the water.

The arrangement of the electrodes 33 is not limited to the pair of electrodes having the opposite polarities. For example, three electrodes 33 may be disposed in juxtapositionwithplate surfaces thereof opposed to each other. Alternatively, five electrodes 33 may be disposed in juxtaposition with plate surfaces thereof opposed to each other. In these cases, the polarities of the electrodes 33 are alternated so that each adjacent pair of electrodes 33 have opposite polarities. What is important is that at least one pair of electrodes 33 are provided. Therefore, the following description is directed to a case where one pair of electrodes 33 are provided.

The vertically opposite edges of the electrodes 33 are held by the electrolyzing chamber 32. Upper edges of the electrodes 33 are held in recesses 77 formed in the electrolyzing chamber 32. These recesses 77 are defined between a pair of ribs projecting inward from a top face portion 75 of the electrolyzing chamber 32. Lower edges of the electrodes 33 are held by a bottom face portion 76 of the electrolyzing chamber 32 via terminal covers 85. The terminal covers 85 cover the lower edges of the electrodes 33, and seal gaps between the bottom face portion 76 of the electrolyzing chamber 32 and the lower edges of the electrodes 33 for prevention of accumulation of lint. The electrodes 33 may be supported at laterally opposite sides thereof.

The inter-electrode pitch (indicated by D2), more specifically, a spacing (indicated by D3) between the electrodes 33, is preferably not smaller than 2mm and not greater than 5mm, for example. If the spacing is smaller than 2mm, the lint is liable to come into a space between the electrodes 33 and adhere on the electrodes, thereby reducing the electrolysis efficiency and the durability. If the spacing is greater than 5mm, application of a higher voltage is required for maintaining the electrolysis efficiency at a high level, making practical construction difficult. Withaspacing of not smaller than 2mm and not greater than 5mm, a practically high durability and a high electrolysis efficiency can be realized.

It is conceivable that the electrolyzing chamber 32 is formed of a material different from the material for the outer tub 2 or, alternatively, of the same material as the outer tub 2 . In the latter case, the electrolyzing chamber 32 can easily be handled for recycling thereof. For example, the electrolyzing chamber 32 is formed of an olefin resin such as polypropylene (PP) . This resin is also employed as the material for the outer tub 2 to impart the outer tub with a chemical resistance to water containing agents such as a detergent and a bleaching agent. Further, addition of a reinforcing material such as glass fibers to the material for the electrolyzing chamber 32 advantageously suppresses reduction in the strength of the tub due to increase in water temperature.

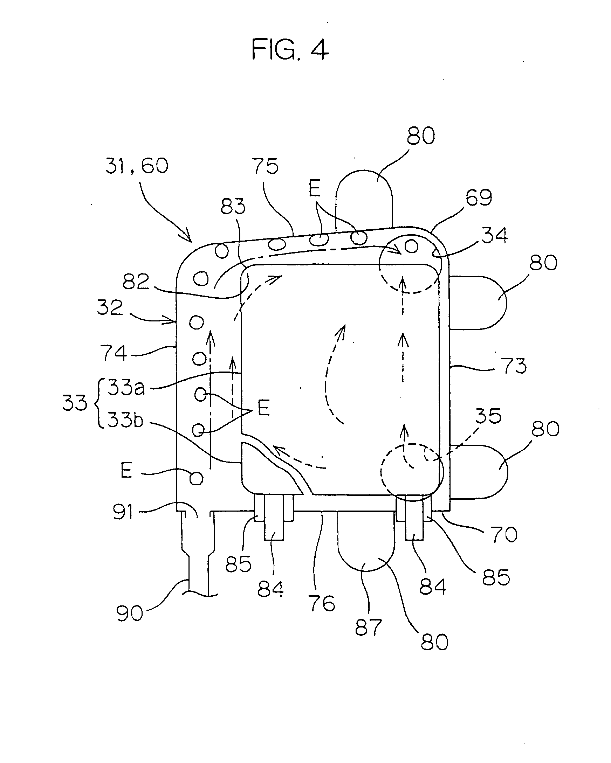

As shown in Figs. 3 and 4, the electrolyzing chamber 32 has the bottom face portion 76, the front face portion 71, a rear face portion 72, a right side face portion 73 and a left side face portion 74 which extend upright from the periphery of the bottom face portion 76, and the top face portion 75. The electrodes 33 are disposed in a space defined by the face portions 71 to 76, and water is retained in the space. The electrolyzing chamber 32 is configured so as to have a smaller dimension as measured from the front face portion 71 to the rear face portion 72. The electrodes 33 are disposed generally parallel to the front face portion 71. The electrolyzing chamber 32 is constituted by a pair of vertically separable bodies 78, 79 (see Fig. 2).

An upper portion 69 of the electrolyzing chamber 32 is inclined with one side thereof located at a higher position. That is, the top face portion 75 of the electrolyzing chamber 32 is inclined upward toward the right side thereof as seen from the front side thereof. The upper water communication path 34 extends from a part of the rear face portion 72 at the higher position. The lower water communication path 35 extends from a part of the rear face portion 72 at a lower position of the electrolyzing chamber 32.

The pair of water communication paths 34, 35 are arranged generally parallel to each other in vertically juxtaposed relation. The water communication paths 34, 35 are tubes having a round section and formed integrally with the rear face portion 72 of the electrolyzing chamber 32. The shape of the pair of water communication paths 34, 35 is not limited to the tubular shape, as long as spaces are defined therein for communication between the inside of the electrolyzing chamber 32 and the inside of the outer tub 2 for water passage. It is also conceivable to provide the water communication paths separately from the electrolyzing chamber 32 or integrally with the outer tub 2.

The water flows into the electrolyzing chamber 32 from the outer tub 2 through the lower water communication path 35. Water treated in the electrolyzing chamber 32 flows out into the outer tub 2 through the upper water communication path 34. The water is caused to flow in this manner by the water streams generated in the outer tub 2 by the rotation of the pulsator 7.

The way of the water flow in the pair of water communication paths 34, 35 is not particularly limited, but it is also conceivable that the water flows in a direction opposite to that described above. It is merely necessary that the pair of water communication paths 34, 35 are provided for the water inlet and the water outlet, and it is also conceivable that at least one of the water communication paths includes a plurality of water communication paths, e.g., three or more water communication paths. It is also conceivable that the pair of water communication paths are provided unitarily or as a single water communication path. For example, the single water communication path is not divided into two water communication paths for the water inlet and the water outlet, but may double as a water inlet path and a water outlet path. The following description is directed to a case where the lower water communication path 35 and the upper water communication path 34 serve as the water inlet path and the water outlet path, respectively.

As shown in Fig. 3, the pair of water communication paths 34, 35 are connected to the outer tub 2 via packings 81. The packings for the water communication paths 34, 35 have the same construction and, therefore, an explanation will be given only to the packing for the water communication path 34.

The packing 81 is a cylindrical elastic component such as composed of a rubber. The packing 81 is fitted around the water communication path 34. The packing 81 is press-fitted in a connection port 67 formed on an outer surface 66 (circumferential wall) of the outer tub 2 externally of the outer tub 2. The packing 81 has a long sealing distance between the tubular water communication path 34 and the connection port 67. The packing 81 is fitted in a predetermined radially compressed manner to seal a gap between the inner circumference of the connection port 67 and the outer circumference of the water communication path 34. The packing 81 is elastically deformable in its radial and axialdirections. Thus, the packing 81 accommodates dimensional errors in the connection port 67 and the water communication path 34. Further, the packing 81 can accommodate a dimensional difference between a pitch of the pair of water communication paths 34, 35 and a pitch of the pair of connection ports 67. The packing 81 accommodates thermal deformation of the outer tub 2 occurring when hot water is retained in the outer tub 2. Thus, breakage and water leakage can be prevented.

Besides the cylindrical packing, an 0-ring and a sheet packing may be employed as the packing 81.

The electrolyzing chamber 32 has a plurality of fixingportions, e.g., four fixing portions 80, provided in the vicinity of the pair of water communication paths 34, 35 for fixing the electrolyzing chamber 32 to the outer tub 2 by screws. The screws 86 extending through through-holes of the fixing portions 80 are externally screwed into bosses 68 projecting from the outer surface 66 of the outer tub 2.

Terminals 84 of the electrodes 33 extend outwa.rd through the bottom face portion 76 of the electrolyzing chamber 32 as shown in Fig. 4. Even if water drops adhere on the outer surface of the electrolyzing chamber 32 due to water condensation and overflow of the water from the washing tub, a short-circuit between the terminals 84 of the pair of electrodes 33 is less liable to occur due to the water drops. Thus, the terminals 84 can electrically be isolated from each other. Further, a separation plate 87 is provided for separating the terminals 84 of the pair of electrodes 33 from each other. The separation plate 87 prevents movement of the water drops to ensure the electrical isolation. The separation plate 87 may double as the fixing portion 80 formed integrally with the electrolyzing chamber 32 for reduction of the number of the components.

The water treatment unit 60 is assembled in the following manner. With the separable bodies 78, 79 of the electrolyzing chamber 32 being separated from each other, the electrodes 33 are set in one 78 of the separable bodies. Then, the pair of separable bodies 78, 79 are combined with each other, and seams thereof are sealed. Thus, the assembling of the water treatment unit 60 is completed. The water treatment unit 60 having the box-shaped electrolyzing chamber 32 per se can be tested, for example, for the sealingproperty and the electrolysis performance thereof, before it is mounted on the outer tub 2. Then, the pair of water communication paths 34, 35 are externally press-fitted in the connection ports 67 of the outer tub 2 with the intervention of the packings 81. The fixing portions 80 of the electrolyzing chamber 32 are respectively fixed to the bosses 68 of the outer tub 2 by screws. The terminals 84 of the electrodes 33 are electrically connected to the energization circuit 30. Further, the water treatment unit 60 can be removed from the outer tub 2 by performing the aforesaid operations in a reverse order. Thus, the maintenance operation and the disassembling operation for the recycling can be facilitated.

Since the water treatment unit 60 is thus provided on the outside of the outer tub 2, the mounting operation for mounting the water treatment unit 60 on the outer tub 2, the maintenance operation for the water treatment unit 60 and the disassembling operation for the recycling can easily be performed from the outside of the outer tub 2. If the electrodes 33 were disposed between the outer tub 2 and the washing/dehydration tub 5, there would be a need for an additional space in the outer tub 2 and additional water to be retained in the space. Where the water treatment unit 60 is mounted on the outer surface of the outer tub 2, on the other hand, the need for the additional space and the additional water is obviated.

It is herein merely necessary that the water treatment unit 60 which ensures easy implementation of the aforesaid operations is provided as a unit separate from the outer tub 2 and unitarily handled. For example, the water treatment unit 60 may include the pair of electrodes 33 and the fixing portions 80 for fixing the unit to the outer tub 2, and be adapted to electrolyze the water in use for the washing process by its own or in cooperation with the outer tub 2 to impart a cleaning capability to the water without addition of the detergent .

The water treatment unit 60 is detachable from the outer tub 2, so that the detaching operation can highly conveniently be performed. Where the electrodes 33 contain a precious metal, easy recycling is advantageously ensured.

Since the water treatment unit 60 incorporates the electrolyzing chamber 32 and the pair of electrodes 33, the water treatment unit 60 can unitarily be handled for the mounting and maintenance operations. Thus, these operations can further be facilitated.

Since the electrodes 33 are supported at the opposite sides thereof within the box-shaped electrolyzing chamber 32, the water treatment unit 60 can be handled without careful attention. Therefore, the assembling, maintenance and disassembling operations can further be facilitated. In addition, there is no possibility that the electrodes 33 are displaced or dislodged in the electrolyzing chamber 32 due to the vibrations of the outer tub 2 during the dehydrating operation.

With the packings 81 provided between the water treatment unit 60 and the outer tub 2, dimensional errors in the outer tub 2 and the corresponding portion of the water treatment unit 60 can be accommodated by elastic deformation of the packings 81 when the water treatment unit 60 is mounted on the outer tub 2, so that the mounting can easily be achieved. In addition, the sealing of the gap between the water treatment unit 60 and the outer tub 2 can be achieved. Therefore, bonding for the sealing can be obviated, so that labor for the assembling operation can be alleviated and the detaching and disassembling operations can be facilitated.

By the provision of the pair of water communication paths 34, 35, the water inlet path and the water outlet path between the electrolyzing chamber 32 and the outer tub 2 can be separated, whereby the water is caused to efficiently flow between the electrolyzing chamber 32 and the outer tub 2. Thus, the treated water can be supplied into the outer tub 2 for effective use in the washing process without wastage, so that the cleaning capability and the sterilizing capability can be enhanced. Further, the water from the outer tub 2 is caused to flow within the electrolyzing chamber 32 for efficient electrolysis.

The pair of water communication paths 34, 35 are spaced apart from each other, so that the treated water is prevented from flowing back into the electrolyzing chamber 32 immediately after flowing out of the electrolyzing chamber 32.

The pair of water communication paths 34, 35 are provided at different vertical positions of the thin-box-shaped electrolyzing chamber 32 provided on the outer surface 66 of the outer tub 2, so that the stagnation of the water and the trapping of air can be suppressed. Thus, the water is caused to flow vertically (in a direction indicated by an arrow in Fig. 3) for efficient electrolysis.

Where the water flows upward in the electrolyzing chamber 32, the provision of the upper water communication path 34 at the inclined upper portion 69 of the electrolyzing chamber 32 permits the water flowing upward in the electrolyzing chamber 32 to be guided along the inclination into the upper water communication path 34 to speedily flow out, thereby facilitating the water flow. The lower water communication path 35 provided at the lower end of the electrolyzing chamber 32 prevents the stagnation of the water in the electrolyzing chamber 32. This advantageously facilitates the water flow in the electrolyzing chamber 32.

It is preferred that the electrodes 33 are thus provided in a space where the water flows to ensure efficient electrolysis. It is particularly preferred that the electrodes 33 are provided in a space where the water is circulated with respect to the outer tub 2 . Thus, the use efficiency of the electrolyzed water can be enhanced. For example, it is conceivable that a circulation mechanism is provided for forcibly circulating the water by sucking the water from the outer tub 2 through an inlet thereof and discharging the water through an outlet thereof, and the electrodes 33 are provided in the circulation mechanism. The circulation mechanism may comprise a tubular water passage for water communication between an upper portion and a lower portion of the outer tub 2, and an electric pump for causing the water to pass through the water passage. The construction of such a circulation mechanism is disclosed in Japanese Patent Application No. 2000-196894 and the like filed by the applicant of the present invention. Besides, a known construction for the water circulation may be employed.

Since the electrolyzing chamber 32 has a thin box shape having a smaller depth with respect to the outer surface of the outer tub 2, the projection of the water treatment unit 60 from the outer surface of the outer tub 2 can be reduced. Where the electrolyzing chamber 32 is of a thin type fitted on the outer side surface 66 as the outer surface of the outer tub 2, for example, an increase in the size of the housing 1 is suppressed which may be required for prevention of the bump of the water treatment unit 60 against the housing 1 during the dehydrating operation as described above. Thus, space saving can be achieved. Where the electrolyzing chamber 32 is of a thin type fitted on the bottom 64 as the outer surface of the outer tub 2, the piping arrangement for the drainage of used water from the electrolyzing chamber 32 can be simplified, thereby achieving space saving.

Where the electrolyzing chamber 32 is provided below the outer tub 2, e.g., below the bottom 64 and the outer side surface 66, water retained at a lower water level within the outer tub 2 can also be utilized. For example, the electrolyzing process can be started in the midst of the water supply to the outer tub 2, so that the time required for the electrolysis can be reduced. Further, a course in which the electrolyzed water is utilized at a lower water level can be realized.

Where the electrolyzing chamber 32 is provided on the outer side surface 66 of the outer tub 2 and the water communication path 35 is provided at the lower end of the electrolyzing chamber 32, the water in the electrolyzing chamber 32 is allowed to flow out into the outer tub 2 through the water communication path 35 during the water drainage from the outer tub 2.

It is also conceivable that at least a part of the electrolyzing chamber 32 is formed integrally with the outer tub 2. In this case, the electrolyzing chamber 32 is preferably provided so as to project outward from the outer surface of the outer tub 2 or to be recessed along the inner surface of the outer tub 2. Thus, the interior configuration of the outer tub 2 can generally properly be maintained, thereby preventing reduction in space efficiency within the outer tub 2 and increase in water consumption more than necessary. Where the inner surface of the electrolyzing chamber 32 and the inner surface of the outer tub 2 are continuous, these inner surfaces are preferably inclined with respect to each other to facilitate the water flow between the inside of the outer tub 2 and the inside of the electrolyzing chamber 32.

In the meantime, the water from the outer tub 2 is often contaminated with lint. If the lint adheres on the electrodes 33, there is a fear that the durability of the electrodes 33 and the electrolysis efficiency are reduced. Therefore, a problem associated with the contamination of the water treatment unit 60 with the lint is solved in the following manner.

Corner portions 82 of the electrodes 33 each have an R-shape 83 (partly shown in Fig. 4). Thus, the electrodes 33 have no corner edge, so that the lint is less liable to be caught on the corner portions of the electrodes 33 and easily released. Even if the lint is caught on the corner portions 82, the lint is naturally released from the corner portion 82 by the water streams.

The R-shape 83 includes an R-shape as seen perpendicularly to the plate surface of the electrode 33, and an R-shape as seen along the plate surface of the electrode 33. At least some of the corner portions may be rounded, but it is preferred that more of the corner portions, particularly, all the corner portions, are rounded.

The spacing (D3) between the electrodes 33 is determined so as to prevent the lint from being caught therebetween. The spacing is preferably not smaller than 2mm, for example. If the spacing is smaller than 2mm, the lint is liable to be caught. Further, a spacing (D4) between the electrode 33 and the electrolyzing chamber 32 may be the same as the aforesaid spacing, or zero. That is, there may be no gap between the electrodes and the electrolyzi.ng chamber 32.

This prevents reduction in water fluidity due to adhesion of the lint. This also prevents the lint from hindering the contact of the water with the electrodes 33. As a result, the reduction in electrolysis efficiency due to the lint can be prevented, so that the electrolysis efficiency can be maintained at a higher level. Since the lint is permitted to enter the water treatment unit 60, there is no need for provision of a lint filter and maintenance against the lint.

As shown in Fig. 2, the washing machine may have an air bubble generator 88 for generating air bubbles from the bottom 64 of the outer tub 2 for enhancement of the cleaning capability. Where the air bubble generator 88 and the water treatment unit 60 are used in combination, the electrolysis can be achieved more efficiently.

The air bubble generator 88 includes an air pump 89, an air hose 90 connected to an air outlet of the air pump 89 for air supply, and a nozzle (not shown) connected to an end of the air hose 90 for ejecting air into the outer tub 2. When the air bubble generator 88 is actuated in the washing process, the air is ej ected from the nozzle, and flows into the washing/dehydration tub 5 through the perforations of the washing/dehydration tub 5 to generate air bubbles below the pulsator 7. The air bubbles are agitated by the rotating pulsator 7, and broken into a multiplicity of minute air bubbles. When the minute air bubbles are brought into contact with the laundry, the minute air bubbles are broken to generate ultrasonic waves. At this time, shock waves within an ultrasonic range are generated, thereby promoting removal of dirt components adhering onto the laundry. Thus, the cleaning capability can be enhanced as compared with a case where air bubbles are not applied.

The air bubble generator 88 has a function as air supplying means for supplying air into the electrolyzing chamber 32 from a lower portion 70 of the electrolyzing chamber 32 in addition to the originally intended function for enhancing the cleaning capability. The air supplying means generates water streams by promoting upward water flow within the electrolyzing chamber 32 of the water treatment unit 60. The air hose 90 is branched in a middle portion thereof. One branch extends to the nozzle, and the other branch is connected to the electrolyzing chamber 32.

A single air supply port 91 is provided in the lower portion 70 of the electrolyzing chamber 32 so as to be supplied with the air from the air hose 90 as shown in Fig. 4. A plurality of air supply ports 91 may be provided. The air pump 89 is actuated in the electrolyzing process. The air supplied into the electrolyzing chamber 32 from the air supply port 91 is broken into air bubbles E, which float in the electrolyzing chamber 32 to flow into the outer tub 2 through the upper water communication path 34 (in a direction indicated by a one-dot-and-dash line in Fig. 4). Correspondingly, the water retained in the electrolyzing chamber 32 is caused to flow by the flow of the air (in a direction indicated by a broken line in Fig. 4). Particularly, where the upper portion 69 of the electrolyzing chamber 32 is inclined and the water communication path 34 is located at the higher position, the air bubbles can quickly flow out of the electrolyzing chamber 32, so that the water flow can further be facilitated. There is no possibility that the air bubbles are trapped between the electrodes 33. As a result, the electrolysis efficiency can be enhanced. Therefore, a voltage required to provide a predetermined electrolyzing capability can be reduced, thereby realizing reduction in size, cost and power consumption of the electrical components such as the transformer 61.

The air supply port 91 is disposed so as not to overlap with the electrodes 33 as seen in plan and so as not to face toward the electrodes 33. Thus, the air can be supplied without contact with the electrodes 33. Therefore, reduction in electrolysis efficiency due to the air can be suppressed. It is preferred that the air supply port 91 is horizontally spaced a predetermined distance from edges of the electrodes 33 in a corner of the bottom face portion 76 of the electrolyzing chamber 32. The predetermined distance is a distance such as not to permit the contact of the air with the electrodes 33, for example, 10mm.

The air supply port 91 and the upper water communication path 34 are disposed at diagonally opposite positions as seen from the front side. Thus, the air can flow a longer distance in the electrolyzing chamber 32, so that the water flow can be facilitated. The air supply port 91 and the lower water communication path 35 are disposed at laterally separate positions as seen from the front side. Thus, water present in a position remote from the lower water communication path 35 is caused to easily flow, which may otherwise have a difficulty in flowing.

Thus, the water flow in the electrolyzing chamber 32 can be facilitated for efficient electrolysis. In addition, the air is introduced into the outer tub 2 for improvement of the cleaning capability. The aforesaid air pump 89 may be adapted to supply the air only to the electrolyzing chamber 32. Referring back to Fig. 1, the following explanation is directed to a case where the air bubble generator 88 is not provided.

A top plate 18 is provided on a top face of the housing 1. The top plate 18 has a laundry loading port 18a provided in a center portion thereof. The loading port 18a is covered with an openable upper lid 19. An operation panel 48 is provided in front of the top plate 18.

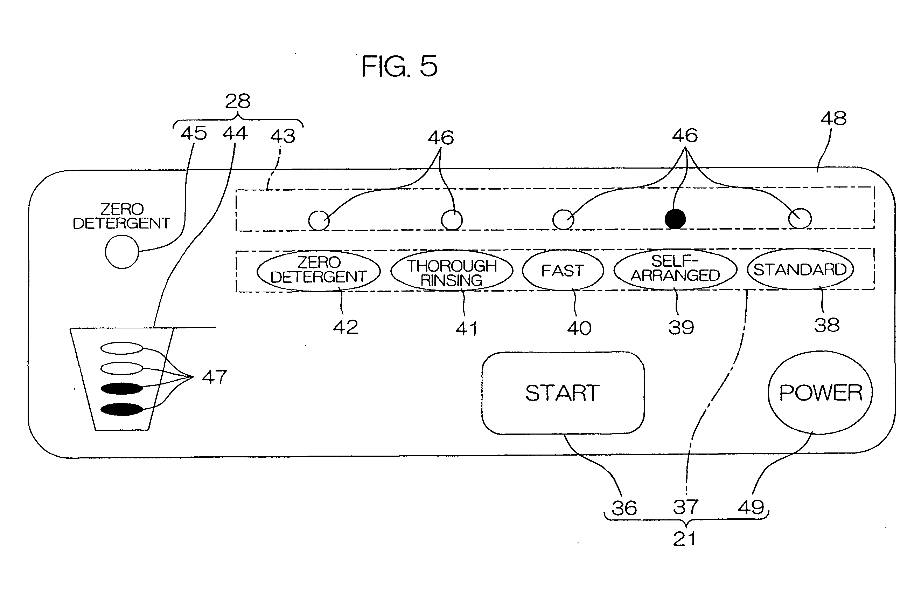

Fig. 5 is a plan view of the operation panel 48. The operation panel 48 includes an operation section 21 and a display section 28. The operation section 21 has a power supply key 49 for turning on power supply to the machine, a start key 36 for starting a washing process, and a set of course keys 37 as selecting means for selecting a washing course. The course key set 37 includes a standard course key 38 for selecting a standard course, a self-arranged course key 39 for selecting a self-arranged course, a fast course key 4 0 for selecting a fast course, a thorough rinsing course key 41 for selecting a thorough rinsing course, and a zero detergent course key 42 for selecting a zero detergent course.

The standard course is a washing course in which a standard washing process is performed. The self-arranged course is a washing course in which a washing process is performed according to a procedure set by a user (manually set procedure) . The fast course is a washing course in which a washing process time is short. The thorough rinsing course is a washing course in which a rinsing operation is thoroughly performed by increasing a rinsing operation period and the number of times of the rinsing operation. These courses employ a detergent. In these courses, water containing the detergent (detergent solution) is retained in the outer tub 2 and the laundry is washed by generating water streams by the rotation of the pulsator 7. These courses are collectively referred to as a first washing course.

The zero detergent course employs no detergent. In this course, water retained in the outer tub 2 is electrolyzed by the electrolyzing device 31 for production of electrolyzed water, and the laundry is washed by generating water streams by the rotation of the pulsator 7. The zero detergent course is referred to as a second washing course.

The display section 28 includes a course display section 43 for displaying a selected washing course, a detergent amount display section 44 as information means for displaying the amount of the detergent corresponding to the load of the laundry, and a zero detergent display section 45 as second information means for indicating addition of no detergent by lighting an LED. In the course display section 43, LEDs 46 are provided in the vicinity of the respective course keys, and one of the LEDs corresponding to the selected washing course is lighted. In the detergent amount display section 44, a plurality of LEDs 47 are provided in an illustration of a detergent measure cup, and a number of LEDs 47 corresponding to the amount of the detergent are lighted for indication of the detergent amount.

Fig. 6 is a diagram illustrating the electrical construction of the fully automatic washing machine according to this embodiment. A control center is a control section 20 including a CPU, a RAM, a ROM, a timer and the like. The control section 20 is comprised of a microprocessor. An operation signal is inputted to the control section 20 from the operation section 21. A water level detection signal is inputted to the control section from a water level sensor 22 as water level detecting means for detecting the level of the water contained in the outer tub 2. The control section 20 is connected to a switch 57 as open/close detecting means for detecting the opening and closing of the upper lid 19. When the upper lid 19 is open, the control section 20 detects this state on the basis of the ON/OFF of an internal circuit of the switch 57. The control section 20 controls the rotation of the motor 8 via the invertor driving section 23, and controls the operation of the torque motor 26 and the operation of the water supply valve 13 via a load driving section 25. The torque motor 26 controls the operation of the clutch 27 and the operation of the water drainage valve 15 as described above. Further, the control section 20 controls the operation of the display section 28 and the operation of a buzzer 29 for notifying the end of the process and an abnormality in the process. The motor 8 is provided with a rotation sensor 24 for outputting pulse signals according to the rotation thereof, and the pulse signals are inputted to the control section 20. The rotation sensor 24 is provided for detecting the rotation speed of the motor 8, i.e., the rotation speed of the washing/dehydration tub.

The pair of electrodes 33 are connected to an output side of the control section 20 via the energization circuit 30 including the transformer 61 and the like. When an energization signal is outputted from the control section 20, the energization circuit 30 is actuated for energization of the pair of electrodes 33.

Sequences for the respective washing courses are stored in the ROM 20a of the control section 20.

When a washing course is selected by the operation of the course key set 37, a sequence for the selected washing course is read out of the ROM 20a. Then, the control section 20 controls loads to be applied to the motor 8 and the like according to the sequence, and performs the washing process according to the selected washing course.

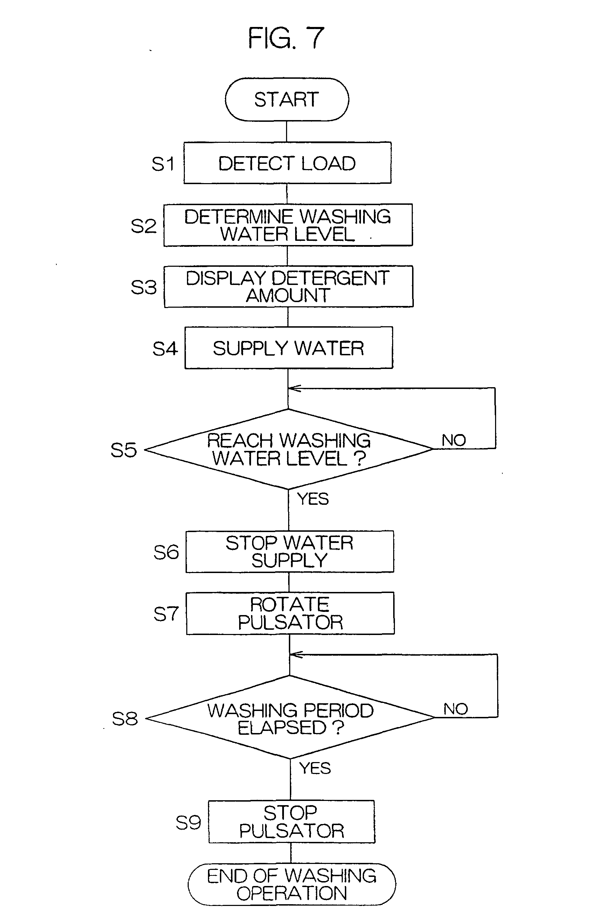

An explanation will be given to the operation of the fully automatic washing machine having the aforesaid construction according to this embodiment. With reference to a flow chart in Fig. 7, there will first be described a case where a user selects the standard course which is a typical washing course employing a detergent.

When the start key 36 is pressed to provide a command for the start of the washing process, the load or the amount of laundry loaded in the washing/dehydration tub 5 is detected prior to the supply of water (Step S1). More specifically, the pulsator 7 is rotated for a short period of time, and the load is determined on the basis of a period during which the consequent inertial rotation continues. In this case, load detection means is constituted by the pulsator 7 and the control section 20. Of course, the detection of the load is not limited to this method, but any other method may be employed.

Next, a washing water level is determined according to the detected load (Step S2), and a detergent amount corresponding to the load is displayed on the detergent amount display section 44 (Step S3) . In view of the display in the detergent amount display section 44, a user adds a proper amount of a detergent into the washing/dehydration tub 5.

In turn, the supply of tap water is started, and the water is supplied to the determined washing water level (Steps S4 to S6). Thus, a detergent solution obtained by dissolving the detergent in the tap water is contained in the outer tub 2.

Subsequently, the pulsator 7 is rotated at a predetermined speed in one direction or in opposite directions, whereby water streams are generated in the outer tub 2 for washing the laundry (Step S7). Dirt adhering to the laundry is removed by the effects of the detergent and the water streams. After a lapse of a predetermined washing period, the pulsator 7 is stopped to end the washing operation (Steps S8, S9).

After the washing operation is completed, a first intermediate dehydrating operation, a first rinsing operation, a second intermediate dehydrating operation, a second rinsing operation and a final dehydrating operation are sequentially performed. Thus, the washing process is completed.

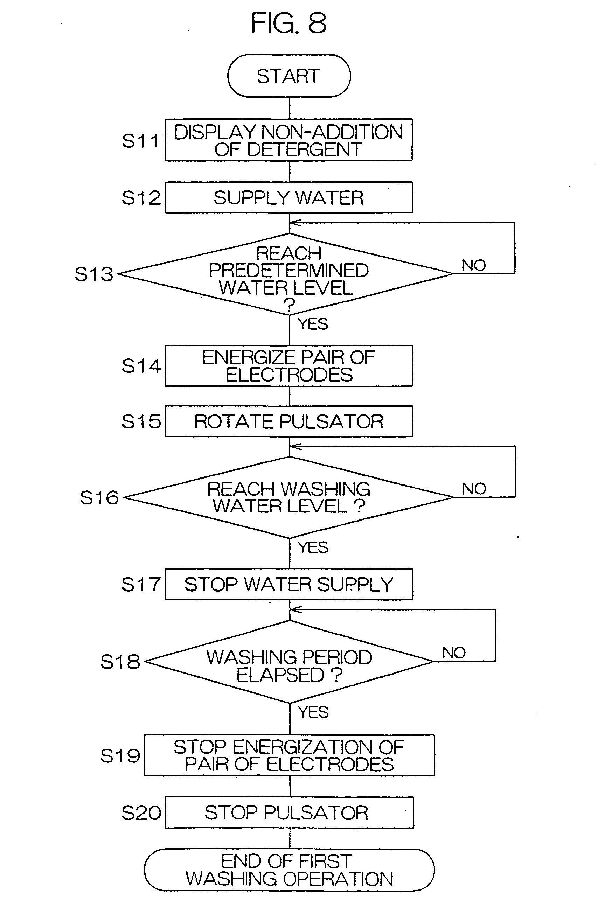

With reference to a flow chart in Fig. 8, an explanation will be given to a case where the user selects the zero detergent course which employs no detergent.

When the start key 36 is pressed to provide a command for the start of the washing process, the LED of the zero detergent display section 45 is lighted instead of the display in the detergent amount display section 44 (Step S11) . Thus, the user is notified that no detergent is added.

Then, the supply of tap water is started (Step S12). The water is supplied to a predetermined washing water level (more specifically a lower water level) for the zero detergent course. When the water in the outer tub 2 reaches a predetermined level which is lower than the washing water level and permits the pair of electrodes 33 of the electrolyzing device 31 to be submerged in the water, the electrolyzing device 31 is actuated, i.e., the pair of electrodes are energized (Steps S13, S14) . Further, the pulsator 7 is rotated at a predetermined speed in one direction or in opposite directions to generate water streams in the outer tub 2 (Step S15).

The tap water contains very small amounts of impurities such as iron, calcium, magnesium and chlorine . Therefore, electrolyzed water is produced through the electrolyzing process performed in the electrolyzing chamber 32, and the tap water goes back and forth between the electrolyzing chamber 32 and the outer tub 2, whereby the outer tub 2 is gradually filled with the electrolyzed water. The electrolyzed water has a weak alkalinity. Further, active oxygen as well as hypochlorous acid (HClO) and hypochlorous ions (ClO-) are generated in the electrolyzed water in the electrolyzing chamber 32. Together with the electrolyzed water, hypochlorous acid and hypochlorous ions flow into the outer tub 2. In the outer tub 2, dirt adhering to the laundry is removed by the effect of the alkaline water and the effect of the water streams. Further, the laundry is sterilized by the effect of hypochlorous acid and hypochlorous ions. The dirt removed from the laundry is decomposed by the effect of the active oxygen in the electrolyzing chamber 32, and prevented from adhering again to the laundry.

When the amount of water reaches the washing water level, the water supply is stopped (Steps S16, S17) . On the other hand, the operation of the electrolyzing device 31 and the operation of the pulsator 7 are continued. After a lapse of a predetermined washing period, the operation of the electrolyzing device 31 (the energization of the pair of electrodes 33) is stopped, and the pulsator 7 is stopped for completion of the first washing operation (Steps S18 to S20).

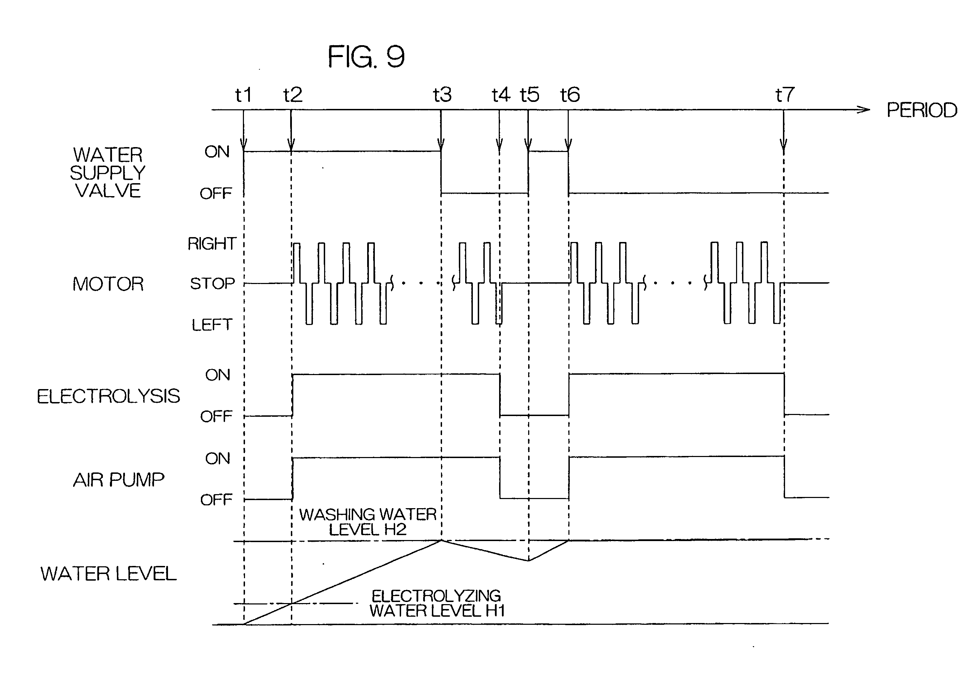

A process sequence from Step S13 to Step S20 will be explained with reference to a timing chart in Fig. 9.

After the water supply is started (at a time point t1), the water level in the outer tub 2 reaches a predetermined electrolyzing water level H1. The electrolyzing water level is specified as a water level at which the electrolyzing process can be started, for example, as a water level at which at least parts of the pair of electrodes, more preferably virtually the entire electrodes 33, are submerged in the water. The electrolyzing water level is lower than the washing water level H2 required for the washing or rinsing operation. Then, the water level sensor 22 senses that the water contained in the outer tub 2 reaches the predetermined water level (at a time point t2). In response to an output signal for the electrolyzing water level H1 from the water level sensor 22, the control section 20 starts the energization of the pair of electrodes 33. Where the air pump 89 is provided, the air pump 89 is actuated in association with the energization of the electrodes 33 to supply air into the electrolyzing chamber 32. Thus, water streams are generated in the electrolyzing chamber 32 for effective electrolysis. While the electrolyzing process is performed, the motor 8 is driven back and forth to rotate the pulsator 7 in opposite directions. During this period, the water supply is continued. When the water level in the outer tub 2 reaches the washing water level H2, this is detected by the water level sensor 22 (at a time point t3), and the water supply valve 13 is closed. Thereafter, the driving of the motor 8 and the air pump 89 is stopped, and the energization of the electrodes 33 is stopped (at a time point t4) . After the water supply valve 13 is closed, the water level in the outer tub 2 is slightly reduced. The water is correspondingly supplied again so that the water level returns to the washing water level H2 (from a time point t5 to a time point t6) . Then, the washing operation is performed for a predetermined period. During this period, the driving of the motor 8 and the air pump 89 and the energization of the electrodes 33 are effected (from a time point t6 to a time point t7). Although the electrolyzing process is once interrupted when the washing water level H2 is satisfied, the electrolyzing process may continuously be performed without the interruption.

By thus starting the energization for the electrolysis at the time point when the water is supplied to the electrolyzing water level which is lower than the washing water level, the electrolyzing process can be started at earlier timing and continued for a longer period of time than in a case where the energization is started when the washing water level is satisfied. As a result, water electrolyzed to a high degree or so-called "densely electrolyzed" water can be obtained. For example, the electrolyzed water has an increased alkalinity and higher concentrations of hypochlorous acid and hypochlorous ions. As a result, the cleaning capability can be enhanced.

By supplying the air from the air pump 89 in association with the energization for the electrolysis, the air promotes the water flow in the electrolyzing chamber 32 for efficient electrolysis of the water. Thus, densely electrolyzed water can be obtained.

After an intermediate dehydrating operation is performed, a second washing operation is performed in the same manner as the first washing operation. Upon completion of the second washing operation, a final dehydrating operation is performed. Thus, the washing process in the zero detergent course is completed.

In the case of water electrolyzed to a predetermined degree within a commonly available range through the electrolyzing process, the cleaning capability of the electrolyzed water increases as the concentration of the electrolyzed water increases. Therefore, more densely electrolyzed water is preferred. When the densely electrolyzed water is to be obtained, there is a fear for overcurrent in the electrolyzing process. That is, the conduction of the electric current varies depending on the electrical conductivity of the water, so that the energization electric current for the electrolysis may vary with the application of a substantially constant voltage. Therefore, electrically more conductive water tends to suffer from the overcurrent, if the energization electric current is set at a higher level for standard water to provide densely electrolyzed water. If the energization electric current is set at a lower level for the electrically more conductive water for prevention of the overcurrent, electrically less conductive water tends to be electrolyzed to a lower degree, so that the cleaning capability may be reduced depending on the electrical conductivity of the water.

To this end, the washing machine according to the present invention includes energization controlling means constituted by the control section 20, the energization circuit 30 and an electric current detection circuit 51 for controlling the energization of the water treatment unit 60 for the electrolysis as shown in Fig. 6. The electric current detection circuit 51 is connected to the energization circuit 30, and adapted to detect the magnitude of the energization electric current for the energization of the electrodes 33 to output the detected magnitude to the control section 20 . According to the output or the sequence, the control section 20 and the energization circuit 30 cooperate with each other to start and stop the energization of the water treatment unit 60. Further, the control section can reverse the direction of the flow of the energization electric current applied to the pair of electrodes 33. For intermittent energization, the control section variably sets the ratio between an energization period and a non-energization period. Thus, an average magnitude of the energization electric current during a predetermined period, for example, during a period longer than an intermittent energization cycle (hereinafter referred to as "average electric current", which may also be cited in the case of the continuous energization, in which the average electric current is equal to the magnitude of the electric current) is varied, while the voltage is kept at a constant level. As a result, the power can virtually be adjusted variably.

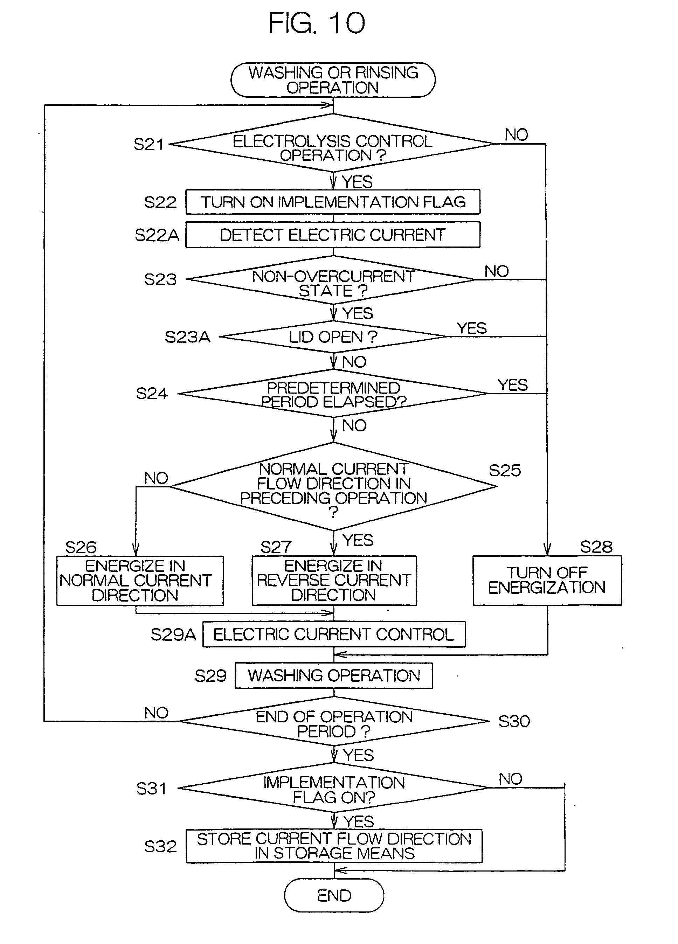

With reference to a flow chart in Fig. 10, an explanation will be given to a control operation. The following explanation is directed to a case where the washing operation is performed once. Where the washing operation is performed a plurality of times, the control operation is performed for each washing operation. Further, the control operation is performed in the same manner for the rinsing operation.

The washing operation is started and, where the electrolyzing process is to be implemented (YES in Step S21), an implementation flag indicative of the implementation of the electrolyzing process is turned on (Step S22). Then, the polarities of the pair of electrodes 33 (or an electric current flow direction) is read out of an EEPROM 56 of the control section 20.

An electric current flow direction lastly employed for the preceding electrolyzing process is stored in the EEPROM 56. Where this washing operation is the first washing operation performed after the power on, for example, an electric current flow direction employed for the last rinsing operation in the preceding washing process is stored in the EEPROM 56. Where this washing operation is the second washing operation in this washing process, an electric current flow direction employed for the first washing operation in this washing process is stored.

The electric current flow direction to be employed for the energization of the pair of electrodes 33 in this washing operation is determined so as to be opposite to the electric current flow direction for the energization of the pair of electrodes 33 thus read out, and the pair of electrodes 33 are energized (Steps S25 to S27) . The washing operation is performed (Step S29) for a predetermined period of time (NO in Step S30). During this period, the magnitude of the energization electric current is detected (Step S22A) , and the electric current controlling operation is performed for adjustment of the average electric current according to the magnitude of the detected electric current (Step S29A) . Further, an overcurrent detecting operation is performed (Step S23) . It is judged whether the upper lid 19 is open or not (Step S23A), and a continuous energization period judging operation is performed (Step S24).

That is, if the magnitude of the detected energization electric current is greater than a predetermined electric current level (NO in Step S23), the energization of the electrodes 33 is interrupted (turnedoff) (StepS28) . After a lapse of apredetermined period, the energization is resumed. When the time elapsed from the start of the energization in the electrolyzing process in this washing operation reaches a continuous energization period (YES in Step S24), the energization is stopped (Step S28). Thereafter, the energization is kept off until the end of the washing operation. If it is judged that the upper lid 19 is open (YES in Step S23A), the energization of the electrodes 33 is interrupted to give a feeling of safety to the user (Step S28). If it is judged that the upper lid 19 is closed (NO in Step S23A), the energization of the electrodes 33 is effected.

Upon completion of the washing operation (YES in Step S30) , the polarities of the electrodes 33 employed in this washing operation is stored in the EEPROM 56 as the storage means (YES in Step S31, and Step S32). The EEPROM 56 is incorporated in the control section 20. Data stored in the EEPROM is rewritable and, even if the power key of the machine is turned off the data is kept retained.

Where the electrolyzing process is not performed (NO in Step S21), the electrodes 33 are not energized (Step S28) and, after the washing operation (Step S29, and YES in Step S30), the stored polarities are kept retained without alteration (NO in Step S31).

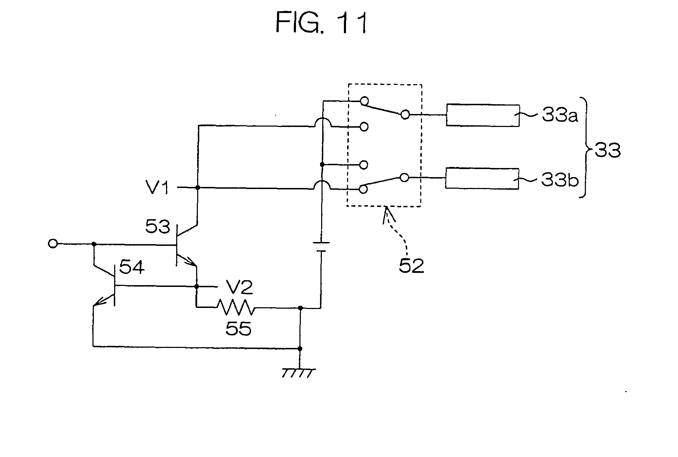

The energization circuit 30 and the electric current detection circuit 51 are integrally constructed as shown in Fig. 11. That is, there are provided a relay 52 operated by the control section 20 as a switch for switching the electric current flow direction for the energization of the pair of electrodes 33, a drive transistor 53 for starting and stopping the energization of the electrodes 33, a protective transistor 54 for protecting the drive transistor 53, and a resistor 55 constituting a shunt for detecting the magnitude of the energization electric current applied to the pair of electrodes 33. A voltage V2 applied to one end of the resistor 55 is monitored for the detection of the energization electric current. According to the magnitude of the detected energization electric current, the control section 20 controls the starting and stopping of the energization of the electrodes 33. The protective transistor 54 is provided as a protective circuit so that the energization can be interrupted independently of the control section 20. A collector-emitter voltage of the drive transistor 53 (voltage between V1 and V2) is monitored and, if the monitored voltage exceeds a predetermined level, the protective transistor 54 is actuated for interruption of the energization through the transistor 53.

The magnitude of the energization electric current applied to the electrodes 33 is detected in the aforesaid manner during the electrolyzing process and, when the magnitude of the detected energization electric current is at a normal level, a normal electric current controlling operation (Step S29A) is performed. When the magnitude of the detected energization electric current is excessively great, an overcurrent controlling operation is performed (NO in Step S23, and Step S28).

The overcurrent controlling operation and the normal electric current controlling operation are performed so as to cope with a difference in the electric current conduction due to the concentration of impurities such as calcium in the water during the electrolysis. When the electric current conduction in the electrolyzing chamber 32 is higher, the electric current conduction in the energization circuit 30 is relatively reduced for the electric current supply. When the electric current conduction in the electrolyzing chamber 32 is lower, the electric current conduction in the energization circuit 30 is relatively increased for the electric current supply. Thus, the average electric current can be kept at a constant level, e.g., at 1A, whereby the power required for the electrolyzing process (power required for electrolyzing a unit amount of water) can be kept at a generally constant level. As a result, water electrolyzed to a generally constant degree can be obtained. Besides the control of the average electric current at the constant level, the energization is interrupted or stopped if it is difficult to control the average electric current. Thus, the overcurrent can be prevented. Since the average electric current can be reduced to not higher than the predetermined level, a temperature increase of circuit elements such as the transistor 53 can be suppressed during the energization.

In the overcurrent controlling operation, the overcurrent is detected. That is, if the magnitude of the energization electric current detected by the electric current detection circuit 51 is greater than a predetermined electric current level, the energization of the electrodes 33 is once interrupted (turned off) for a predetermined period, and then resumed. Where the energization electric current exceeds 2A and the collector-emitter voltage of the transistor 53 exceeds lV, for example, the energization is interrupted for 5 seconds immediately after the detection of the overcurrent. After a lapse of 5 seconds, the energization is resumed. After the resumption of the energization, the detection of the electric current is continued in the same manner. Where the result of the detection indicates that the overcurrent state still continues, the resumption of the energization may be effected only several times, e.g., six times. The energization may be resumed under different conditions. For example, the same electric current flow direction is employed for the energization until the third resumption of the energization, and the opposite electric current flow direction is thereafter employed. Where the overcurrent is detected even after the final resumption of the energization, the energization is stopped. Even if the energization is stopped after the detection of the overcurrent, the energization is permitted in the subsequent washing operation and rinsing operation. It is also conceivable that the energization is not resumed but kept stopped after the detection of the overcurrent. Where the energization is resumed under different conditions, the electric current flow direction as well as the energization period, the voltage and the electric current may variably set . It is also conceivable that the energization conditions are not changed at the resumption of the energization.

In the normal electric current controlling operation (Step S29A), the conditions for the energization of the electrodes 33 are varied according to the magnitude of the energization electric current detected by the electric current detection circuit 51. For example, a continuous energization operation and an intermittent energization operation are selectively performed. In the intermittent energization operation, the energization period (or ON-period during which the electric current actually flows) and the non-energization period (OFF-period) may be predefined as constant periods. Alternatively, the ratio between the non-energization period and the energization period may variably be set depending on the magnitude of the detected energization electric current, e.g., depending on the maximum electric current level. Otherwise, the voltage may variably be set, or the magnitude of the energization electric current may variably be set. In addition, the electric current flow direction may be changed. Where the detected energization electric current exceeds 2A and the collector-emitter voltage of the transistor 53 is not higher than lV, for example, the intermittent energization operation is performed with an energization period of 0.5 seconds and a non-energizationperiodof 4 seconds after the detection. Where the detected energization electric current is greater than 1A and not greater than 1.5A, the intermittent energization operation is performed with an energization period of 2 seconds and a non-energization period of 1 second after the detection. Where the detected energization electric current is greater than 1.5A and not greater than 2A, the intermittent energization operation is performed with an energization period of 1 second and a non-energization period of 1 second after the detection. Where the detected energization electric current is not greater than 1A, the continuous energization operation is performed in this state. The energization circuit 30 and the electric current detection circuit 51 may have any other known construction than the aforesaid construction.

The detection of themagnitude of the energization electric current (Step S22A) is synchronized with the energization when the intermittent energization operation is performed.

By variably setting the energization conditions according to the magnitude of the energization electric current applied to the electrodes 33 in the normal electric current controlling operation, the control section 20 suppresses the overcurrent in the electrolyzing process, and adjusts the energization electric current, i.e., the power per unit amount of water, in the electrolyzing process when the washing operation is performed with the use of a reduced amount of the detergent. For example, the energization electric current can be adjusted to maximize the cleaning effect. Therefore, the densely electrolyzed water can advantageously be obtained. Further, the cleaning capability can be maintained at a higher level irrespective of the conductivity of the water.

The control section 20 interrupts the energization when the overcurrent to the electrodes 33 is detected. Even if the energization electric current is set at a higher level for water having a standard electric current conduction, for example, the overcurrent can be suppressed during the electrolysis of electrically more conductive water. Where the energization is resumed after the interruption, the electrolyzing process can be continued. Thus, the densely electrolyzed water can advantageously be obtained.

The power, particularly, the average electric current can be maintained generally constant through the electric current controlling operation including the intermittent energization operation. Therefore, the construction of the energization circuit 30 can be simplified.

By reversing the flow direction of the electric current applied to the water treatment unit 60 for each of the predetermined unit operations, e.g., the washing operation and the rinsing operation, in the washing process, the polarities of the electrodes 33 are alternated, so that one of the electrodes 33 is prevented from being kept at one polarity. As a result, excessive wear of one of the electrodes 33 can be suppressed which may occur due to the non-alternation of the polarities.

Since the electric current flow direction is reversed for each unit operation in the washing process, the electrolyzing process can continuously be performed with higher efficiency without the reversal of the electric current flow direction during the electrolyzing process. Therefore, the densely electrolyzed water can advantageously be obtained.

Further, the flow direction of the electric current applied to the electrodes 33 is stored after each of the predetermined operations, e.g., the washing operation and the rinsing operation, in the washing process, and reversed on the basis of the previous electric current flow direction. Thus, the electric current flow direction employed for the preceding operation can assuredly be switched to an electric current flow direction to be employed for the subsequent operation . Therefore, the wear of one of the electrodes 33 can be suppressed irrespective of the operations performed in the washing process. Even if the washing operation is repeated many times in the washing process, for example, there is no possibility that one of the electrodes 33 is kept at one polarity.

It is more preferred that the storage means is adapted to retain stored data therein irrespective of the ON/OFF of the power switch. Even where the electrolyzing process is performed three times in every washing process, for example, the non-alternation of the polarities of the electrodes can be prevented.

In contrast to the arrangement described above, it is also conceivable that the next electric current flow direction is stored in the storage means and the subsequent energization is effected on the basis of the data thus stored. It is also conceivable that the storage in the storage means is effected at any other timing in the washing process, rather than after the end of an operation in the washing process.

By reducing the energization period in each unit operation of the washing process to shorter than the maximum energization period, the wear of the electrodes 33 can advantageously be suppressed. This is because, if the energization is continued for a long period of time with one of the electrodes 33 kept at one polarity, the electrodes are more susceptible to wear. The maximum energization period is set at 15 minutes, for example. In the case of the intermittent energization, the maximum energization period may be defined as a period elapsed from the start of the first energization to the end of the last energization in the washing process, or the sum of the energization periods in which the energization is actually effected in the intermittent energization in the washing process.

Examples of the aforesaid unit operation in the washing process include the washing operation and the rinsing operation. It is also conceivable that the washing process includes a plurality of unit operations, for example, the washing process in the aforesaid zero detergent course.

In the meantime, the control section 20 as the washing controlling means may perform different control operations on the water treatment unit 60 for the respective courses or, alternatively, perform different control operations on components other than the water treatment unit 60 for the respective courses.

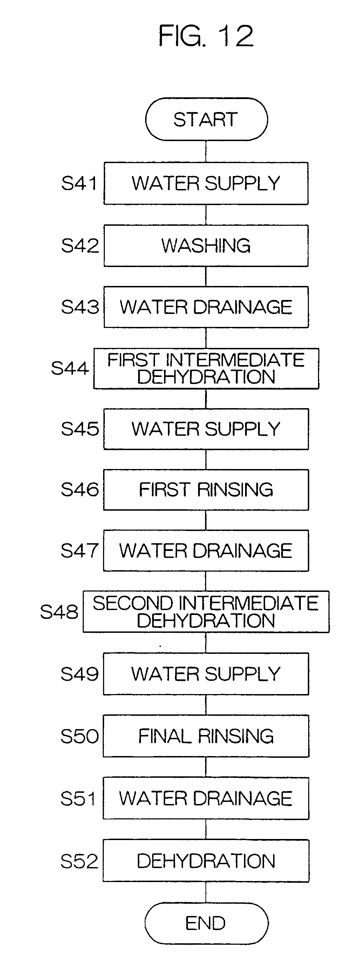

For example, an intermediate dehydrating operation may be performed after the washing operation and the rinsing operation in a washing process. The washing process to be performed in this case will be described with reference to a flow chart in Fig. 12. In this washing process, the following operations are sequentially performed. That is, the washing process includes water supply (Step S41), washing (Step S42), water drainage (Step S43), first intermediate dehydration (Step S44), water supply (step S45), first rinsing (Step S46), water drainage (Step S47), second intermediate dehydration (Step S48) , water supply (Step S49) , final rinsing (Step 550), water drainage (Step S51) and dehydration (Step S52). In the first course, a detergent solution is used in the washing operation in Step S42. In the second course, the electrolyzed water is used in the washing operation in Step S42.

The control section 20 functions as intermediate dehydration period reducing means and water drainage period reducing means according to the present invention for reducing the periods of the first intermediate dehydrating operation, the second intermediate dehydrating operation and the water draining operations (Steps S43, S47) in the second course utilizing the electrolyzing process performed by the water treatment unit 60 as compared with those in the first course employing the detergent.

The period of the first intermediate dehydrating operation in Step S44 is 6 minutes in the first course, and 3 minutes and 30 seconds in the second course. The period of the second intermediate dehydrating operation in Step S48 is 3 minutes in the first course, and 2 minutes in the second course. The periods of the water draining operations in Steps S43, S47 during which the water drainage valve is open are each 1 minute and 40 seconds in the first course, and 1 minute and 10 seconds in the second course. Thus, the periods of the respective operations are set shorter in the second course than in the first course.

By thus reducing the intermediate dehydration periods in the second course, the time required for the washing process in the second course can be reduced. Since the second course employs a smaller amount of the detergent, bubbles can be suppressed which may be generated by the agitation of water in the intermediate dehydrating operations after the washing operation and the rinsing operation. As a result, the dehydration can sufficiently be achieved in a shorter period of time. Since the resistance due to the bubbles can be reduced, the rotation speed of the washing/dehydration tub 5 can rapidly be increased for enhancement of the dehydration effect.

By reducing the water drainage periods in the second course, the time required for the washing process in the second course can be reduced. Since the generation of the bubbles can be suppressed in the second course employing a smaller amount of the detergent as compared with the first course employing a greater amount of the detergent, the water drainage can be achieved in a shorter period of time.

In the washing course employing the detergent, e.g., in the standard course, the electrolyzing device 31 may be operated in the rinsing operations (first and second rinsing operations), so that the electrolyzed water is employed for rinsing the laundry. Thus, the laundry can be sterilized while being rinsed.

It is also conceivable that the electrolyzing device 31 is operated in the washing operation in the washing course employing the detergent, e.g., in the standard course. However, there is a high possibility that the water containing the detergent is not properly electrolyzed, resultingintheovercurrent. Therefore, the energization of the electrodes 33 is, in principle, stopped in the washing operation employing the detergent solution to assuredly prevent the overcurrent in the aforesaid embodiment. Where the electrolyzing process is performed in the washing operation employing the detergent as described above, on the other hand, the energization period ortheenergizationelectriccurrent is preferably reduced. Thus, the overcurrent is suppressed and, at the same time, a cleaning capability improving effect and a sterilizing effect of the electrolyzed water can be provided in addition to the cleaning effect of the detergent, thereby further enhancing the cleaning capability. The concentration of the detergent is lower in the rinsing operation than in the washing operation. Even if the detergent is used in the washing operation, the electrolysis of the water in the subsequent rinsing operation poses no problem, so that the sterilizing effect of the electrolyzed water can be provided.

The washing machine may have a dry-cleaning course in which a dry-cleaning detergent is employed for the washing operation. It is preferred that the water treatment unit 60 is not energized in the dry-cleaning course of the washing machine. Thus, shrinkage of the clothes by the electrolyzed water can be prevented. That is, the clothes to be dry-cleaned with the use of the dry-cleaning detergent are liable to shrink due to the alkaline electrolyzed water. However, the suppression of the shrinkage of the clothes and the sterilizing effect can be ensured by reducing the period of the energization of the water treatment unit 60 or the energization electric current.

An automatic detergent adding device may be provided as adding means for automatically adding a proper amount of the detergent according to the detected load. Thus, the detergent is automatically added in the washing course employing the detergent, e.g., in the standard course, and no detergent is added in the zero detergent course. A conventionally known device may be used as the automatic detergent adding device and, therefore, no explanation will be given to the construction thereof.

Some of washing machines of the type adapted for the automatic addition of the detergent are designed to perform a preliminary washing operation and, after the water drainage, perform a main washing operation. In such a preliminary washing operation, the electrolyzed water according to the present invention may be employed.

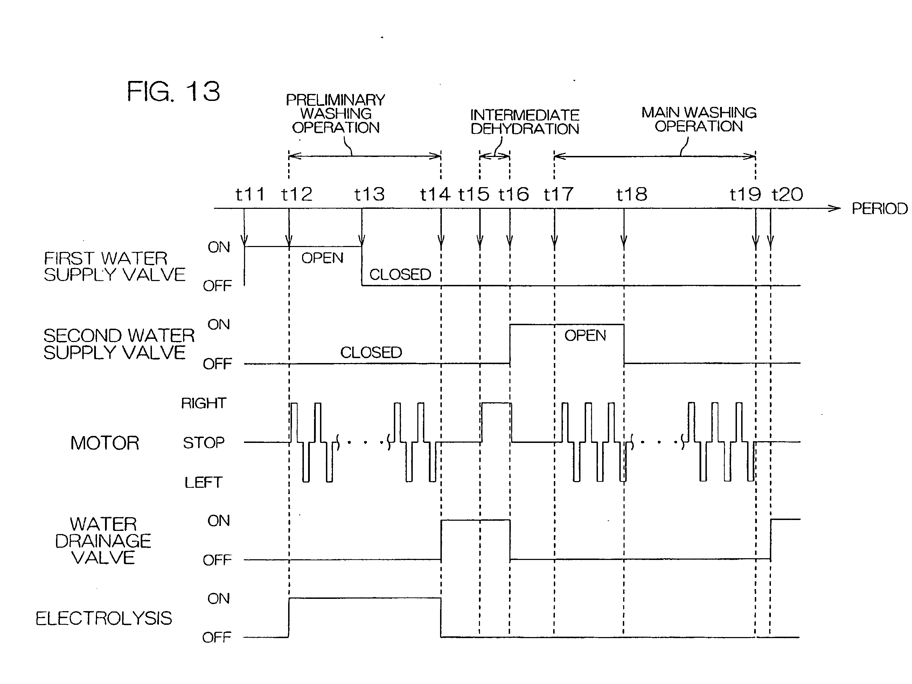

An explanation will be given to such a washing machine with reference to a timing chart in Fig. 13. Components of the washing machine having the same constructions as those of the washing machine previously described are denoted by the same reference characters, and no explanation will be given thereto. Components having different constructions will mainly be explained. When the washing process is started, water supply is started (at a time point t11). In this water supply, water is supplied into the outer tub 2 through a first supply valve without supplying the detergent from the automatic detergent adding device. When the water reaches a predetermined water level (electrolyzing water level) in the outer tub 2 (at a time point t12), the preliminary washing operation is started. That is, the energization of the water treatment unit 60 is started for the electrolyzing process, and the motor 8 is driven to rotate the pulsator 7 as preliminary washing water stream generating means in opposite directions. When the water reaches a water level predetermined for the preliminary washing operation, the water supply is stopped (at a time point t13) . The preliminary washing operationisperformedforapredetermined period. Upon completion of the preliminary washing operation (at a time point t14), the driving of the motor 8 is stopped, and the energization of the water treatment unit 60 is stopped to stop the electrolyzing process. The water drainage valve 15 is opened to once drain the water out of the outer tub 2. Then, an intermediate dehydrating operation is performed (from a time point t15 to a time point t16).

Subsequently, the main washing operation is performed. First, a second water supply valve is opened (at a time point t16) . Thus, the water is supplied into the outer tub 2, while the detergent is supplied therein from the automatic detergent adding device. When the water reaches the electrolyzing water level (at a time point t17), the main washing operation is started. At this time, the motor 8 is driven to perform the washing operation with the use of the detergent without performing the electrolyzing process. Then, the water is supplied to the washing water level, and the washing operation is performed for a predetermined period ( from a time point t17 to a time point t19).

Besides the washing operation employing the detergent, the washing operation employing the electrolyzed water may be performed as the main washing operation.

By thus employing the electrolyzed water for the preliminary washing operation, the cleaning capability in the preliminary washing operation can be enhanced as compared with the preliminary washing operation employingordinary water. Thus, thecleaningcapability in the main washing operation can be enhanced.

While the embodiment of the present invention has thus been described, it should be understood that the invention be not limited to the embodiment as will be described below.

The electrolyzing device 31 may be a device attached to the washing tub 2, e.g., a unit such as the water treatment unit 60 attached to the outer tub 2 or a device provided inside the outer tub 2, or a device provided separately from the washing tub. What is important is that the electrolyzing device 31 is adapted to electrolyze the water in use for the washing process to impart the water with the cleaning capability without addition of the detergent.

The washing machine according to the present invention is not limited to the fully automatic washing machine. The invention is applicable to a so-called drum type washing machine in which the washing tub is constituted by an outer tub and a drum of horizontal axis type provided in the outer tub. Further, the invention is applicable to a so-called double tub washing machine in which a single washing tub is provided separately from a dehydration tub.

The water treatment means according to the present invention is not limited to the electrolyzing device, but any treatment means may be employed which performs a specific treatment on tap water to impart the tap water with the cleaning capability. Further, the present invention is not limited to the electrolysis of the tap water alone. For promotion of the electrolysis of the tap water, the electrolyzing process may be performed on an electrolytic solution prepared by adding salt or sodium hydrogencarbonate to the tap water.

The water stream generating means according to the present invention is not limited to the pulsator. For example, the water streams may be generated by rotating the washing/dehydration tub. In this case, the washing/dehydration tub serves as the water stream generating means. What is important is that the water stream generating means is capable of generating water streams within the washing tub.

The information means and the second information means according to the present invention are not limited to the display means such as the detergent amount display section and the zero detergent display section. For example, means for notifying the amount of the detergent and the non-addition of the detergent by voice may be employed.

This application claims priority benefits under the Convention on the basis of Japanese Patent Applications No. 2001-106923 and No. 2001-133252 filed with the Japanese Patent Office on April 5, 2001 and on April 27, 2001, respectively, the disclosure thereof being incorporated herein by reference.

## Claims

1. An electric washing machine comprising a washing tub for containing laundry, water level detecting means for detecting a level of water supplied into the washing tub, and an electrolyzing device for electrolyzing the water in use for a washing process to impart a cleaning capability to the water without addition of a detergent,
the electric washing machine **characterized by** energization controlling means which starts energizing of the electrolyzing device for the electrolysis when the water level detecting means senses that the level of the water contained in the washing tub reaches a predetermined water level which is lower than a water level required for a washing or rinsing operation after water supply into the washing tub is started for the washing or rinsing operation.

2. An electric washing machine comprising a washing tub for containing laundry, an electrolyzing device for electrolyzing water in use for a washing process to impart a cleaning capability to the water without addition of a detergent, and energization controlling means for controlling energization of the electrolyzing device for the electrolysis,
the electrolyzing device including an electrolyzing chamber, at least one pair of electrodes disposed in the electrolyzing chamber, and a water communication path which permits communication between the electrolyzing chamber and the washing tub for water passage,
the electric washing machine **characterized by** air supplying means for supplying air into the electrolyzing chamber from a lower portion of the electrolyzing chamber, wherein the air supplying means supplies the air during the energization by the energization controlling means.

3. An electric washing machine comprising a washing tub for containing laundry, an electrolyzing device for electrolyzing water in use for a washing process to impart a cleaning capability to the water without addition of a detergent, and energization controlling means for controlling energization of the electrolyzing device for the electrolysis,
the energization controlling means including means for detecting an energization electric current, wherein the energization controlling means changes conditions for the energization of the electrolyzing device according to the detected energization electric current.

4. An electric washing machine comprising a washing tub provided in a housing for containing laundry, an electrolyzing device for electrolyzing water in use for a washing process to impart a cleaning capability to the water without addition of a detergent, and energization controlling means for controlling energization of the electrolyzing device for the electrolysis,
the housing having an openable lid covering a loading port through which the laundry is loaded into and unloaded from the washing tub,
the energization controlling means including means for detecting the opening and closing of the lid, wherein the energization controlling means stops the energization upon detection of the opening of the lid.

5. An electric washing machine comprising a washing tub for containing laundry and washing the laundry therein, and an electrolyzing device for electrolyzing water in use for a washing process to impart a cleaning capability to the water without addition of a detergent,
the electric washing machine **characterized by** washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, and
intermediate dehydration period reducing means for reducing a period of an intermediate dehydrating operation to be performed after the washing operation or a rinsing operation when the second course is effected by the washing controlling means as compared with that when the first course is effected.

6. An electric washing machine comprising a washing tub for containing laundry and washing the laundry therein, and an electrolyzing device for electrolyzing water in use for a washing process to impart a cleaning capability to the water without addition of a detergent,
the electric washing machine **characterized by** washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, and
water drainage period reducing means for reducing a period of water drainage from the washing tub when the second course is effectedbythewashingcontrollingmeans as compared with that when the first course is effected.

7. An electric washing machine comprising a washing tub for containing laundry, and an electrolyzing device for electrolyzing water in use for a washing process to impart a cleaning capability to the water without addition of a detergent,
the electric washing machine **characterized by** energization controlling means which, where the detergent is added to water contained in the washing tub for the washing process, stops energization of the electrolyzing device during a washing operation but effects the energization of the electrolyzing device during a rinsing operation.

8. An electric washing machine comprising a washing tub for containing laundry and washing the laundry therein, and an electrolyzing device for electrolyzing water in use for a washing process to impart a cleaning capability to the water without addition of a detergent,
the electric washing machine **characterized by** washing controlling means which selectively effects a first course in which the detergent is added to water contained in the washing tub for a washing operation and a second course in which the water electrolyzed by the electrolyzing device is employed for the washing operation without the addition of the detergent to the water contained in the washing tub, wherein
the energization controlling means reduces a period of energization of the electrolyzing device or an energization electric current when the first course is effected as compared with that when the second course is effected.

9. An electric washing machine comprising a washing tub for containing laundry, and an electrolyzing device for electrolyzing water in use for a washing process to impart a cleaning capability to the water without addition of a detergent,
the electric washing machine **characterized by** energization controlling means which, where a dry-cleaning course is predefined for performing the washing process with the use of a dry-cleaning detergent, performs one of three control operations in the dry-cleaning course, the three control operations including a control operation in which energization of the electrolyzing device is stopped and control operations in which an energization period or an energization electric current is reduced as compared with that in a course accompanying the energization of the electrolyzing device.

10. An electric washing machine comprising a washing tub for containing water and laundry and washing the laundry therein by agitating the water and the laundry,
the electric washing machine **characterized by** water treatment means for electrolyzing the water to impart a cleaning capability to the water, and
air bubble generating means for generating minute air bubbles by injecting air into the water.
